# EUROPÄISCHE PATENTSCHRIFT

(11) **EP 1 207 406 B1**
(45) Veröffentlichungstag und Bekanntmachung des Hinweises auf die Patenterteilung: **08.08.2007**
(21) Anmeldenummer: 01122072.0
(22) Anmeldetag: 14.09.2001
(51) Int. Cl.: G01S 7/03, H01Q 19/02, G01S 7/40, H01Q 1/22, H01Q 1/52

(54) **Sender-Empfänger-Einheit mit störreduzierter Antenne**
Transmit/receive unit with interference reducing antenna
Dispositif émetteur/récepteur comportant une antenne pour réduire l'interférence

(30) Priorität: 21.11.2000 DE 10057691
(43) Veröffentlichungstag der Anmeldung: 22.05.2002
(73) Patentinhaber: VEGA Grieshaber KG, 77709 Wolfach (DE)
(72) Erfinder: Fünfgeld, Martin, Dipl.-Ing., 77749 Hohberg (DE); Fehrenbach, Josef, Dipl.-Ing., 77716 Haslach i.K. (DE); Griessbaum, Karl, Dipl.-Ing., 77796 Mühlenbach (DE)
(74) Vertreter: Patentanwälte Westphal, Mussgnug & Partner

(56) Entgegenhaltungen:
- DE-A- 4 331 353
- US-A- 4 661 817

## Beschreibung

Die Erfindung betrifft eine Sender-Empfänger-Einheit, die insbesondere für Meßanwendungen geeignet ist, mit einem Sender zum Erzeugen eines Abtastsignals, einer Erfassungsantenne zum Abstrahlen des Abtastsignals in ein Erfassungsvolumen und zum Auffangen eines aus dem Erfassungsvolumen zurückgeworfenen Nutz-Echosignals und einem Empfänger zum Auswerten eines von der Erfassungsantenne gelieferten Echosignals.

Derartige Sender-Empfänger-Einheiten kommen in Meßsystemen für diverse Anwendungen zum Einsatz, bei denen das von der Erfassungsantenne empfangene Abtastsignal ausgewertet wird, um Aufschlüsse über das Vorhandensein oder Nichtvorhandensein oder die örtliche Verteilung oder Beschaffenheit von zu erfassenden Gegenständen im Erfassungsvolumen zu gewinnen.

Ein Beispiel für ein derartiges System ist ein sogenanntes Füllstandsradar, bei dem eine Funkwelle in einen Behälter ausgestrahlt wird und ein aus dem Behälter zurückgeworfenes Echo ausgewertet wird, um Aufschluß über den Pegel eines zu überwachenden Füllgutes in dem Behälter zu gewinnen.

Solche Sender-Empfänger-Einheiten sind, zum Beispiel, aus US 4 661 817 oder DE 4 331 353, wie im Oberbegriff des unabhängigen Anspruches 1 beschrieben, schon bekannt.

Bei der Auswertung eines solchen Echosignals besteht das Problem, daß dieses sich in der Regel nicht nur aus Beiträgen des Objekts oder der Objekte zusammensetzt, deren Erfassung beabsichtigt ist, sondern daß deren Beiträgen, im Folgenden als Nutz-Echosignal bezeichnet, meist ein Stör-Echosignal überlagert ist, das aus diversen Quellen herrühren kann. Eine Quelle von Stör-Echosignalen, die sich insbesondere bei kurzen Abständen zwischen der Erfassungsantenne und dem zu erfassenden Objekt bemerkbar macht, sind Reflexionen innerhalb der Antenne selbst. Derartige Reflexionen entstehen in der Antenne überall dort, wo Leiterabschnitte mit unterschiedlichen Wellenwiderständen aneinander angrenzen. Prinzipiell ließe sich das Primärecho einer solchen Fehlanpassungsstelle im Echosignal durch eine zeitliche Austastung unterdrücken, da es in Folge des kurzen zurückzulegenden Weges den Empfänger früher erreicht als jedes echte, von einem zu erfassenden Objekt zurückgeworfene Echo. Da aber das Echo einer solchen Fehlanpassungsstelle ausschließlich leitungsgebunden übertragen wird und damit nur eine sehr geringe weglängenabhängige Dämpfung erfährt, wohingegen die Intensität eines Nutz-Echosignals mit dem Quadrat der im freien Raum zurückgelegten Weglänge abnimmt, können auch mehrfache Reflexionen eines solchen "Antennenechos" die Auswertung des Nutzsignals für kleine Meßabstände empfindlich stören.

Aufgabe der vorliegenden Erfindung ist, eine Sender-Empfänger-Einheit der eingangs genannten Art anzugeben, die auch bei einem geringen Abstand zwischen Antenne und einem ein Echo zurückwerfenden Gegenstand die Gewinnung eines nicht oder nur wenig gestörten Echosignals ermöglicht.

Die Aufgabe wird dadurch gelöst, daß bei einer erfindungsgemäßen Sender-Empfänger-Einheit eine Antennennachbildung über ein oder mehrere Koppler an den Sender und den Empfänger angeschlossen ist, die mit dem Abtastsignal beaufschlagt, ein zum Stör-Echosignal proportionales Korrektursignal liefert, wobei der oder die Koppler Korrektursignal und Echosignal so überlagert, beziehungsweise überlagern, daß Korrektursignal und Stör-Echosignal einander auslöschen.

Im Sinne der Erfindung kann die Antenne eine freistrahlende Antenne, beispielsweise Horn-, Parabol-, Planarantenne, Stielstrahler oder dielektrischer Strahler sein. Des weiteren kann eine Antenne auch eine Einkopplung auf Wellenleiter darstellen. Dies kann z.B. eine Einkopplung auf eine Koaxialsonde, Eindrahtleitung, 2-Drahtleitung oder Hohlleiter sein.

Bei einer ersten, besonders einfach zu realisierenden Ausgestaltung der Erfindung ist die Antennennachbildung eine zweite Antenne, die so angeordnet ist, daß sie in einen Absorber abstrahlt. Es ist leicht einzusehen, daß eine solche zweite Antenne in dem Maße, wie sie baulich der Erfassungsantenne entspricht, exakt das gleiche durch Reflexion in der Antenne bedingte Stör-Echosignal liefert. Da der Absorber kein Echosignal zurückwirft, besteht das von der Antennennachbildung gelieferte Echosignal ausschließlich aus dem Stör-Echosignal.
Durch Subtraktion dieses Signals vom von der Erfassungsantenne gelieferten Echosignal im Koppler wird somit das reine Nutz-Echosignal isoliert.

Insbesondere wenn die Erfassungsantenne in einem geschlossenen Erfassungsvolumen eingesetzt wird, kann es bei dieser Ausgestaltung vorteilhaft sein, auch die nähere Umgebung der Erfassungsantenne an der Antennennachbildung zu reproduzieren, so daß z.B. von der Erfassungsantenne nahe benachbarten Behälterwänden zurückgeworfene Echoanteile, die nicht dem Echo zu erfassender Objekte entsprechen, im Signal der Antennennachbildung reproduziert werden und so im Koppler ausgelöscht werden können.

Wenn die Reflexionskoeffizienten der Wellenwiderstands-Unstetigkeiten von Erfassungsantenne und Antennennachbildung gleich sind, insbesondere wenn beide baugleiche Antennen sind, ist es zweckmäßig, daß die Sender-Empfänger-Einheit einen Leistungsteiler zum Verteilen des Abtastsignals mit jeweils gleicher Leistung an die Erfassungsantenne und an die Antennennachbildung aufweist. In diesem Fall sind die Amplituden des Stör-Echosignals und des Korrektursignals jeweils gleich, so daß Korrektursignal und Echosignal ohne Anwendung von Korrekturfaktoren überlagert werden können, um das Stör-Echosignal auszulöschen.

Einer zweiten Ausgestaltung zufolge ist die Antennennachbildung ein Netzwerk aus komplexen Widerständen. In einem solchen Netzwerk werden die einzelnen Unstetigkeiten des Wellenwiderstandes der Erfassungsantenne durch Glieder aus komplexen Widerständen nachgebildet. Deren Werte können jeweils so gewählt werden, daß sie in einem festen Proportionalitätsverhältnis zu den Reflexionskoeffizienten der Unstetigkeiten der Erfassungsantenne stehen, wobei der Proportionalitätsfaktor weitgehend frei wählbar ist. Diese Ausgestaltung erlaubt es unter anderem, die einzelnen Echos des Kompensationssignals jeweils um 180° phasenverschoben zu denen des Stör-Echosignals zu erzeugen, so daß eine Kompensation des Stör-Echosignals durch einfache additive Überlagerung erfolgen kann.

Da bei der zweiten Ausgestaltung die Reflexionskoeffizienten der Antennennachbildung insbesondere größer gewählt werden können als die der Erfassungsantenne, genügt es, erstere mit einem kleineren Bruchteil der Sendeleistung zu versorgen als die Erfassungsantenne, um ein Korrektursignal mit einer zum Unterdrücken des Stör-Echosignals ausreichenden Intensität zu erhalten.

Wenn das Echosignal ein hochfrequentes Funksignal ist, kann es wünschenswert sein, daß zwischen der Erfassungsantenne und dem Koppler bzw. zwischen der Antennennachbildung und dem Koppler jeweils ein Mischer zum Umsetzen von Echosignal bzw. Korrektursignal auf eine niedrigere Zwischenfrequenz angeordnet ist, um einen Koppler mit einem einfacheren Aufbau verwenden zu können.

Der Koppler kann insbesondere die Struktur eines Wellenleiterrings mit vier Anschlüssen haben, die jeweils durch Leiterabschnitte verbunden sind, deren Länge einem Viertel der Wellenlänge des Abtastsignals entspricht. Erfassungsantenne und Nachbildung sind an benachbarte Anschlüsse angeschlossen, um so allein durch die Signallaufzeit auf dem dazwischenliegenden Leiterabschnitt eine gegenphasige Überlagerung von Echosignal und Kompensationssignal zu erzielen. Sender und Empfänger können gemeinsam an einem dem Anschluß der Erfassungsantenne oder der Nachbildung benachbarten Anschluß angeschlossen sein.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: ein Blockdiagramm einer Sender- bzw. Empfänger-Einheit gemäß einer ersten Ausgestaltung der Erfindung;
- Fig. 2: Antenne und Antennennachbildung für eine erfindungsgemäße Sender-Empfänger-Einheit;
- Fig. 3: eine Antennennachbildung gemäß einer zweiten Ausgestaltung der Erfindung;
- Fig. 4: eine Variante, bei der eine Umsetzung von Echosignal und Korrektursignal auf eine Zwischenfrequenz stattfinden wird;
- Fig. 5: den Aufbau eines in der Ausgestaltung der Fig. 1 anwendbaren Leistungsteilers; und
- Fig. 6: eine Antennennachbildung gemäß einer weiteren Ausgestaltung der Erfindung.

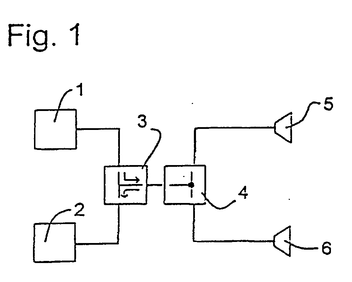

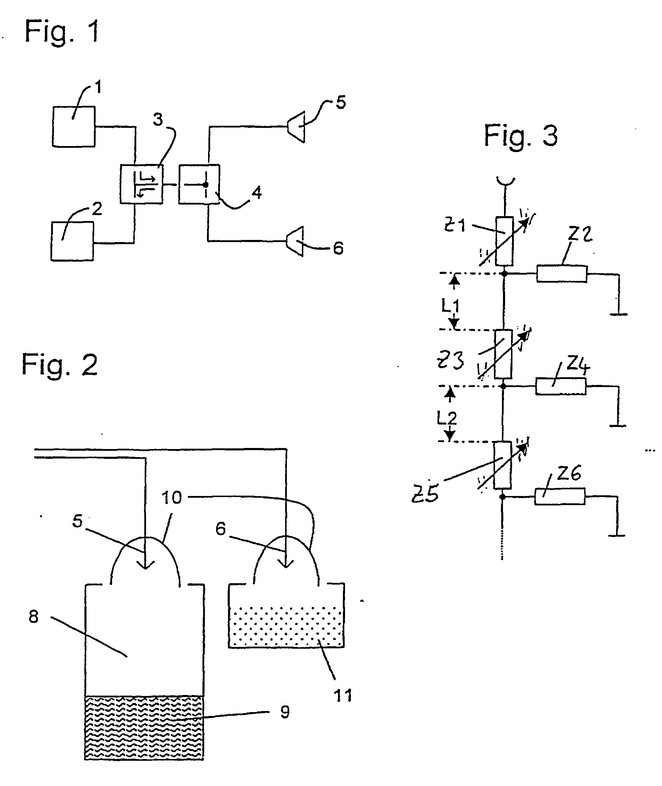

Fig. 1 verdeutlicht anhand eines Blockschaltbildes das Prinzip der Erfindung. Ein Sender 1 ist über einen Richtkoppler 3 mit einem Leistungsteiler 4 verbunden, der die Leistung des Senders 1 zu gleichen Teilen auf eine Antenne 5 und eine Antennennachbildung 6 aufteilt. Die Antenne 5 strahlt ein vom Sender 1 geliefertes hochfrequentes Abtastsignal in ein Erfassungsvolumen ab, von wo ein Bruchteil der abgestrahlten Sendeeistung als Echo von zu erfassenden Objekten zurückgeworfen und von der Antenne 5 aufgefangen wird. In der Antenne 5 überlagert sich dieses Echosignal mit einem Stör-Echosignal, das durch Reflexionen des Sendesignals an Unstetigkeitsstellen des Wellenwiderstandes innerhalb der Antenne entsteht. Das dadurch gestörte Echosignal wird durch den Leistungsteiler 4 zurück zum Richtkoppler 3 geführt.

Ein zweiter Anteil des Abtastsignals wird vom Leistungsteiler 4 einer Antennennachbildung 6 zugeführt. Bei der Antennennachbildung 6 kann es sich um eine mit der Antenne 5 im wesentlichen baugleiche zweite Antenne handeln, wie in Fig. 2 genauer dargestellt, oder um ein Netzwerk, wie in Fig. 3 genauer dargestellt. Die Antennennachbildung 6 liefert an den Leistungsteiler 5 ein Korrektursignal zurück, das sich aus einer Mehrzahl von Beiträgen zusammensetzt, die jeweils durch eine zeitliche Verzögerung in Bezug auf das Abtastsignal, eine Amplitude und eine Phase gekennzeichnet sind. Verzögerung und Amplitude entsprechen jeweils Beiträgen des Stör-Echosignals im Echosignal von der Antenne 5; die Phasen sind jeweils um 180° zu denen des Stör-Echosignals verschoben. Durch additive Überlagerung im Leistungsteiler 5 löschen sich die jeweiligen Beiträge des Korrektursignals und des Stör-Echosignals gegenseitig aus, und das vom Leistungsteiler 4 an den Richtkoppler 3 übertragene Signal enthält im wesentlichen nur noch die Echos der zu erfassenden Objekte im Erfassungsvolumen.

Der Richtkoppler 3 leitet das korrigierte Echosignal dem Empfänger 2 zu. Die Übertragungsstrecke vom Sender 1 zum Empfänger 2 innerhalb des Richtkopplers 3 ist im Vergleich zu den Übertragungsstrecken vom Sender 1 zum Leistungsteiler 4 und vom Leistungsteiler 4 zum Empfänger 2 stark bedämpft, so daß das im Empfänger 2 zu verarbeitende Signal im wesentlichen nur aus dem Echosignal besteht. Restanteile des Abtastsignals vom Sender 1, die im Fall einer unvollständigen Bedämpfung der direkten Verbindung den Empfänger 2 über den Richtkoppler 3 erreichen, treffen dort deutlich früher als das Echosignal ein und können daher durch zeitliche Filterung unterdrückt werden.

Fig. 2 zeigt eine Konkretisierung des anhand von Fig. 1 beschriebenen Prinzips, bei der die Nachbildung 6 eine mit der Antenne 5 baugleiche zweite Antenne beinhaltet. Die Erfassungsantenne 5 ist hier an einem teilweise flüssigkeitsgefülltem Tank angeordnet, wobei das Innere des Tanks das Überwachungsvolumen 8 und die Flüssigkeit 9 im Tank ein zu erfassendes Objekt darstellt. Das von der Antenne 5 empfangene Echosignal enthält neben dem Echo des Spiegels der Flüssigkeit 9 durch Reflexion an Unstetigkeiten in der Antenne 5 selbst erzeugte Beiträge sowie ein Echo von der Rückseite des paraboloidförmigen Reflektors 10, der zum Bündeln des von der Antenne 5 ausgestrahlten Abtastsignals in Richtung auf den Flüssigkeitsspiegel dient. Der Reflektor 10 ist zwar nicht notwendigerweise leitend mit der Antenne 5 verbunden, kann aber ebenfalls als Teil der Antenne 5 aufgefaßt werden.

Die Antennennachbildung 6 ist baugleich mit der Antenne 5, sie ist wie diese mit einem Reflektor 10 ausgestattet, und strahlt in einen Absorber 11 ab. Dieser Absorber 11 kann ein elektrisch leitfähiges Material geringer Dichte sein, wie etwa ein metall- oder graphithaltiger Schaum, dessen Oberfläche nur ein vernachlässigbares Echo zurückwirft und der das von der Antennennachbildung 6 abgestrahlte Signal in seinem Innern absorbiert. Aufgrund der Baugleichheit von Antenne 5 und Nachbildung 6 und des Reflektors 10 unterscheiden sich die von beiden gelieferten Signale lediglich durch den Beitrag der Oberfläche der Flüssigkeit 9. Indem die Weglängen vom Leistungsteiler 4 zur Antenne 5 bzw. zur Nachbildung 6 jeweils um ein Viertel der Wellenlänge des Abtastsignals unterschiedlich gewählt werden, wird erreicht, daß die von beiden gelieferten Echosignale am Leistungsteiler 4 sich gegenphasig überlagern und somit nur der Nutzsignalanteil, das Echo des Flüssigkeitsspiegels, weitergeleitet wird.

Fig. 3 veranschaulicht eine Realisierung der Antennennachbildung 6 in Form eines Netzwerks. Das in Fig. 3 gezeigte Netzwerk umfaßt eine Mehrzahl von Gliedern, mit komplexen Widerständen Z1 bis Z6. Für die Praxis hat sich gezeigt, daß die komplexen Widerstände Z1 und Z6 zum Teil oder alle auch durch reelle ohm'sche Widerstände ersetzt werden können. Vorteilhafterweise werden dann einstellbare Widerstände eingesetzt, um das Netzwerk an die Antenne abgleichen zu können. Hierdurch ist es möglich die Amplitude jedes einzelnen Beitrags des von der Nachbildung 6 gelieferten Korrektursignals an das Echosignal von der Antenne 5 anpassen zu können. Die einzelnen komplexen Widerstände Z1, Z2, ... sind durch Leiterabschnitte mit Längen L1, L2 getrennt, die jeweils den Abständen zwischen Unstetigkeitsstellen des Wellenwiderstandes in der Antenne 5 entsprechen. Die Leiterabschnitte L1 und L2 können z.B. aus Koaxialleitungen oder Leitungen in Streifenleitertechnik bestehen. Weitergehend können die Impedanzsprünge der Antennennachbildung auch durch den Einsatz von Leitungen mit dementsprechenden Impedanzen erzeugt werden. Dadurch erhält man eine Kette von mehreren Leitungstücken und kann auf den Einsatz von diskreten Bauteilen ganz verzichten.

Bei dieser Ausgestaltung kann das Teilungsverhältnis des Leistungsteilers 4 im Prinzip beliebig sein. Um möglichst viel Leistung des Senders 1 für die eigentliche Messung zur Verfügung zu haben, ist bevorzugt, daß der der Antenne 5 zugeführte Leistungsanteil mehr als 50 % der Senderleistung ausmacht. Durch entsprechende Anpassung der Werte der komplexen Widerstände Z1, Z2, ... kann die Reflektivität der Antennennachbildung angepaßt und so sichergestellt werden, daß die Amplituden der einzelnen Beiträge des Korrektursignals und des Stör-Echosignals jeweils entgegengesetzt gleich sind und sich somit am Leistungsteiler 4 gegenseitig auslöschen.

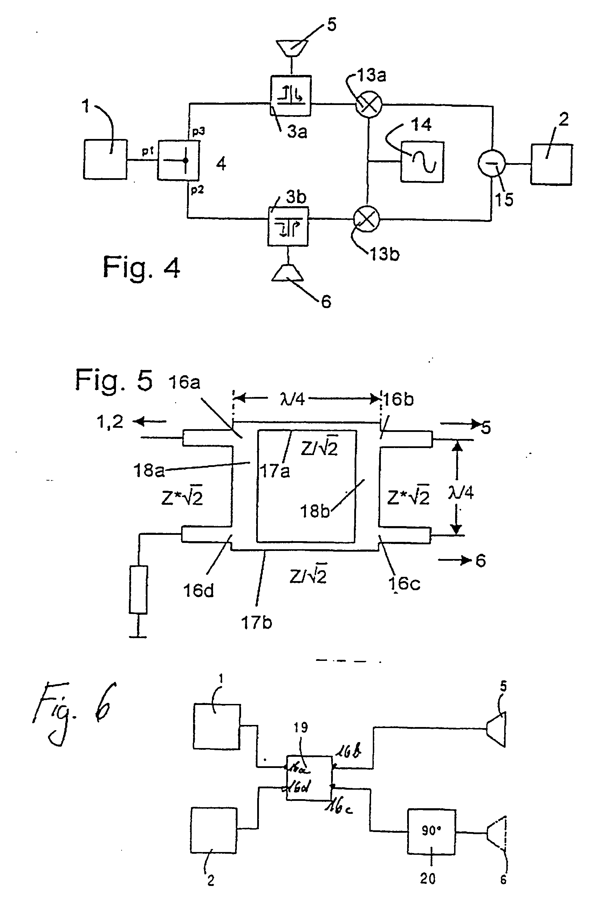

Fig. 4 zeigt eine Abwandlung des in Fig. 1 dargestellten Prinzip, bei der die Positionen von Richtkoppler und Leistungsteiler vertauscht sind. Hier ist der Ausgang des Senders 1 direkt an einen Eingang p1 des Leistungsteilers 4 angeschlossen; dessen Ausgänge p2, p3 sind mit jeweils einem Richtkoppler 3a, 3b verbunden, der das hochfrequente Abtastsignal des Senders 1 der Antenne 5 bzw. der Nachbildung 6 zuführt. Von der Antenne 5 bzw. der Nachbildung 6 erhaltene Echo- bzw. Kompensationssignale werden jeweils über die Richtkoppler 3a, 3b zwei Mischern 13a, 13b zugeführt, wo sie durch Mischen mit einer von einem Oszillator 14 gelieferten Schwingung auf eine Zwischenfrequenz umgesetzt werden, die niedrig genug ist, um in einem Subtrahierer 15, der hier für die Echosignale die Signalüberlagerungsfunktion des Leistungsteilers 4 aus Fig. 1 übernimmt, verarbeitet zu werden. Das durch die Subtraktion im Subtrahierer 15 von seinem Störecho-Anteil befreite Echosignal wird dem Empfänger 2 zugeführt.

Anders als beim Richtkoppler 3 der Fig. 1 ist bei den Richtkopplern 3a, 3b eine starke Bedämpfung der direkten Verbindung vom Leistungsteiler 4 zum Mischer 13a bzw. 13b nicht erforderlich, denn da die gegebenenfalls die Richtkoppler auf dem direkten Wege durchlaufenden Signalbeiträge identisch sind, heben sie sich im Subtrahierer 15 gegenseitig auf.

Fig. 5 zeigt ein Beispiel für einen Leistungsteiler, der im Falle eines hinreichend schmalbandigen Abtastsignals als Leistungsteiler 4 in den Ausgestaltungen der Fig. 1 und 4 anwendbar ist. Es handelt sich um einen 90°-Hybrid-Koppler, mit vier zu einem Wellenleiterring mit vier Anschlüssen, 16a, 16b, 16c, 16d verbundenen Leiterabschnitten 17a, 17b, 18a, 18b. Die Längen dieser vier Leiterabschnitte entsprechen jeweils einem Viertel der mittleren Wellenlänge des Abtastsignals in den Leiterabschnitten. An einem ersten Anschluß 16a sind, gegebenenfalls über einen Richtkoppler wie den in Fig. 1 gezeigten Richtkoppler 3, Sender 1 und Empfänger 2 angeschlossen. An zwei durch den Leiterabschnitt 18b verbundene Anschlüsse 16b, 16c sind die Antenne 5 bzw. die Nachbildung 6 angeschlossen. Der vierte Anschluß 16d ist mit einem Widerstand abgeschlossen. Die Wellenwiderstände in den Zuleitungen von den Anschlüssen zum Sender-Empfänger, zur Antenne, der Nachbildung oder dem Widerstand haben jeweils einen gleichen Wert Z; der Wellenwiderstand der Leiterabschnitte 18a, 18b beträgt Z*√2, der der Abschnitte 17a, 17b Z/√2. Bei dieser Anordnung teilt sich das vom Sender 1 eingespeiste Signal zu gleichen Teilen und um 3 dB gedämpft auf die Antenne 5 und die Nachbildung 6 auf. Am der Antenne zugeordneten Anschluß 16b hat es eine Phasenverschiebung von -90° in Bezug auf den Anschluß 16a des Senders, am Anschluß 16c der Nachbildung eine von -180°. Am Anschluß 16 findet eine Auslöschung des Abtastsignals statt. Das Echosignal von der Antenne 5 und das Korrektursignal von der Nachbildung 6 haben am Anschluß 16a eine Phasendifferenz von 180°, so daß das Korrektursignal das Stör-Echosignal destruktiv überlagert. Die Dämpfung ist für das Echosignal und das Korrektursignal jeweils 6 dB, so daß das Störsignal im wesentlichen vollständig kompensiert wird.

Am Anschluß 16d addieren sich die Reflexionen von Antenne 5 und Nachbildung 6. Um Reflexionen an diesem Punkt zu verhindern, muß dieser Anschluß des Kopplers daher mit dem Wellenwiderstand Z abgeschlossen sein.

Die Wellenwiderstände der einzelnen Leiterabschnitte 17a, 17b, 18a, 18b können auch abweichend von den angegebenen Werten gewählt werden, um eine ungleichmäßige Aufteilung der Sendeleistung auf die Antenne 5 und die Nachbildung 6 zu erreichen.

Dies ist insbesondere bei einer schaltungstechnischen Nachbildung der Antenne sinnvoll, wie mit Bezug auf Fig. 3 beschrieben, deren Reflektivität höher gewählt werden kann als die der Antenne 5.

Gemäß einer Ausführungsform der Erfindung nach Fig. 6 ist der Sender 1 an Anschluß 16a des 90°-Hybrid-Kopplers 19 angeschlossen. Der Empfänger 2 befindet sich an Anschluss 16d, die Antenne 5 an 16b und die Nachbildung 6 an Anschluss 16c, wobei noch zusätzlich eine Phasendrehungseinheit 20 von 90° zwischen Anschluss 16c und der Nachbildung vorgenommen werden muß. Für den Anschluss 16a (Sender) ergibt somit eine Addition der Reflexionen von Antenne und Nachbildung und für den Anschluss 16d (Empfänger) eine Kompensation der Reflexionen. Bei dieser Anordnung wird außer dem 90°-Hybrid kein zusätzlicher Koppler oder Powersplitter benötigt.

Wenn anstatt einer Nachbildung eine komplex konjungierte Nachbildung (180° Drehung) eingesetzt wird, kann auch auf die 90° Phasenverschiebung 20 verzichtet werden. Beim Einsatz einer direkten Antennennachbildung kann die Verschiebung von 90° auch bei der Anpassungen der Leitungslängen zur Antenne und zur Nachbildung, die sowieso vorgenommen werden muß, berücksichtigt werden.

## Patentansprüche

1. Sender-Empfänger-Einheit mit einem Sender (1) zum Erzeugen eines Abtastsignals, einer Erfassungsantenne (5) zum Abstrahlen des Abtastsignals in ein Erfassungsvolumen (8) und zum Auffangen eines aus dem Erfassungsvolumen (8) zurückgeworfenen Nutz-Echosignals und einem Empfänger (2) zum Auswerten eines von der Erfassungsantenne (5) gelieferten Echosignals, das sich aus dem Nutz-Echosignal und einem in der Erfassungsantenne (5) erzeugten Stör-Echosignal zusammensetzt, **dadurch gekennzeichnet, daß** eine Antennennachbildung (6) über ein oder mehrere Koppler (3,4,15,19) an den Sender (1) und den Empfänger (2) angeschlossen ist, die, mit dem Abtastsignal beaufschlagt, ein zum Stör-Echosignal proportionales Korrektursignal liefert, wobei der oder die Koppler (3,4,15,19) Korrektursignal und Echosignal so überlagert beziehungsweise überlagern, daß Korrektursignal und Stör-Echosignal einander auslöschen.

2. Sender-Empfänger-Einheit nach Anspruch 1, **dadurch gekennzeichnet, daß** die Antennennachbildung (6) eine zweite Antenne ist und so angeordnet ist, daß sie in einen Absorber (11) abstrahlt.

3. Sender-Empfänger-Einheit nach Anspruch 2, **dadurch gekennzeichnet, daß** die Antennennachbildung (6) mit der Erfassungsantenne (5) baugleich ist.

4. Sender-Empfänger-Einheit nach Anspruch 1, **dadurch gekennzeichnet, daß** die Antennennachbildung (6) ein Z-Netzwerk ist.

5. Sender-Empfänger-Einheit nach einem der vorhergehenden Ansprüche, **dadurch gekennzeichnet, daß** sie einen Leistungsteiler (4) zum Verteilen des Abtastsignals mit jeweils gleicher Leistung an die Erfassungsantenne (5) und an die Antennennachbildung (6) aufweist.

6. Sender-Empfänger-Einheit nach Anspruch 2 oder 4, **dadurch gekennzeichnet, daß** sie einen Leistungsteiler (4) zum Verteilen des Abtastsignals an die Erfassungsantenne (5) und an die Antennennachbildung (6) aufweist, der der Antennennachbildung (6) einen kleineren Anteil der Leistung des Abtastsignals zuführt als der Erfassungsantenne (5), und daß die Nachbildung (6) eine höhere Reflektivität als die Erfassungsantenne (5) hat.

7. Sender-Empfänger-Einheit nach einem der vorhergehenden Ansprüche, **dadurch gekennzeichnet, daß** sie das Korrektursignal um 180° phasenverschoben zum Stör-Echosignal liefert.

8. Sender-Empfänger-Einheit nach einem der vorhergehenden Ansprüche, **dadurch gekennzeichnet, daß** das Echosignal ein Funksignal ist und daß zwischen der Erfassungsantenne (5) und dem Koppler (15) bzw. zwischen der Nachbildung (6) und dem Koppler (15) jeweils ein Mischer (13a, 13b) zum Umsetzen von Echosignal bzw. Korrektursignal auf eine Zwischenfrequenz angeordnet sind.

9. Sender-Empfänger-Einheit nach einem der vorhergehenden Ansprüche, **dadurch gekennzeichnet, daß** der Koppler (3) einen Wellenleiterring mit vier Anschlüssen (16a, 16b, 16c, 16d) aufweist, die jeweils durch Leiterabschnitte (17a, 17b, 18a, 18d), deren Länge jeweils einem Viertel der Wellenlänge des Abtastsignals entspricht, daß Erfassungsantenne (5) und Nachbildung (6) an benachbarte Anschlüsse (16b, 16c) angeschlossen sind und daß Sender (1) und Empfänger (2) gemeinsam an einen dem Anschluß (16b, 16c) der Erfassungsantenne (5) oder der Nachbildung (6) benachbarten Anschluß (16a) angeschlossen sind.

## Claims

1. Transceiver unit comprising a transmitter (1) for generating a sampling signal, a detection antenna (5) for emitting the sampling signal in a detection volume (8) and for picking up a useful echo signal reflected from the detection volume (8), and a receiver (2) for evaluating an echo signal which is supplied by the detection antenna (5) and which is composed of the useful echo signal and an interference echo signal generated in the detection antenna (5), **characterised in that** a duplicate antenna (6) is connected via one or more couplers (3, 4, 15, 19) to the transmitter (1) and the receiver (2), said duplicate antenna being acted upon by the sampling signal and supplying a correction signal which is proportional to the interference echo signal, wherein the coupler(s) (3, 4, 15, 19) superpose(s) the correction signal and the echo signal in such a way that the correction signal and the interference echo signal cancel one another out.

2. Transceiver unit according to claim 1, **characterised in that** the duplicate antenna (6) is a second antenna and is arranged in such a way that it emits into an absorber (11).

3. Transceiver unit according to claim 2, **characterised in that** the duplicate antenna (6) is structurally identical to the detection antenna (5).

4. Transceiver unit according to claim 1, **characterised in that** the duplicate antenna (6) is a Z network.

5. Transceiver unit according to one of the preceding claims, **characterised in that** it has a power splitter (4) for distributing the sampling signal with an identical power in each case between the detection antenna (5) and the duplicate antenna (6).

6. Transceiver unit according to claim 2 or 4, **characterised in that** it has a power splitter (4) for distributing the sampling signal between the detection antenna (5) and the duplicate antenna (6), which power splitter supplies a smaller proportion of the power of the sampling signal to the duplicate antenna (6) than to the detection antenna (5), and **in that** the duplicate (6) has a higher reflectivity than the detection antenna (5).

7. Transceiver unit according to one of the preceding claims, **characterised in that** it supplies the correction signal in a manner phase-shifted through 180° with respect to the interference echo signal.

8. Transceiver unit according to one of the preceding claims, **characterised in that** the echo signal is a radio signal, and **in that** a mixer (13a, 13b) for respectively converting the echo signal and the correction signal to an intermediate frequency is arranged respectively between the detection antenna (5) and the coupler (15) and between the duplicate (6) and the coupler (15).

9. Transceiver unit according to one of the preceding claims, **characterised in that** the coupler (3) comprises a waveguide ring with four terminals (16a, 16b, 16c, 16d) which are connected in each case through conductor sections (17a, 17b, 18a, 18d), the length of which corresponds in each case to one quarter of the wavelength of the sampling signal, **in that** the detection antenna (5) and the duplicate (6) are connected to adjacent terminals (16b, 16c), and **in that** the transmitter (1) and the receiver (2) are jointly connected to a terminal (16a) adjacent to the terminal (16b, 16c) of the detection antenna (5) or of the duplicate (6).

## Revendications

1. Module émetteur/récepteur comportant un émetteur pour générer un signal de détection, une antenne de saisie (5) pour émettre le signal de détection dans un volume de saisie (8) et pour recevoir le signal utile d'écho renvoyé à partir du volume de saisie (8) et un récepteur (12) pour exploiter le signal d'écho fourni par l'antenne de saisie (5), signal qui se compose du signal utile d'écho et d'un signal parasite d'écho généré dans l'antenne de saisie (5),
**caractérisé en ce qu'**
une copie d'antenne (6) est reliée par un ou plusieurs coupleurs (3, 4, 15, 19) à l'émetteur (1) et au récepteur (2), cette copie recevant le signal de détection pour fournir un signal de correction proportionnel au signal parasite d'écho,
le ou les coupleurs (3, 4, 15, 19) combinant le signal de correction et le signal d'écho pour que le signal de correction et le signal parasite d'écho se suppriment réciproquement.

2. Module émetteur/récepteur selon la revendication 1,
**caractérisé en ce que**
la copie d'antenne (6) est une seconde antenne disposée pour rayonner dans un absorbeur (11).

3. Module émetteur/récepteur selon la revendication 2,
**caractérisé en ce que**
la copie d'antenne (6) est de même construction que l'antenne de saisie (5).

4. Module émetteur/récepteur selon la revendication 1,
**caractérisé en ce que**
la copie d'antenne (6) est un réseau d'impédance Z.

5. Module émetteur/récepteur selon l'une des revendications précédentes,
**caractérisé en ce qu'**
elle comporte un diviseur de puissance (4) pour répartir le signal de détection avec chaque fois la même puissance vers l'antenne de saisie (5) et vers l'antenne de copie (6).

6. Module émetteur/récepteur selon la revendication 2 ou 4,
**caractérisé en ce qu'**
elle comporte un diviseur de puissance (4) pour répartir le signal de détection entre l'antenne de saisie (5) et la copie d'antenne (6), ce diviseur fournissant une fraction de la puissance du signal de détection, plus petite vers la copie d'antenne (6) que vers l'antenne de saisie (5) ; et
la copie (6) a une plus forte réflexibilité que l'antenne saisie (5).

7. Module émetteur/récepteur selon l'une des revendications précédentes,
**caractérisé en ce qu'**
elle fournit un signal de correction déphasé de 180° par rapport au signal parasite d'écho.

8. Module émetteur/récepteur selon l'une des revendications précédentes,
**caractérisé en ce que**
le signal d'écho est un signal radio et entre l'antenne de saisie (5) et le coupleur (15) ou entre la copie (6) et le coupleur (15) on a chaque fois un mélangeur (13a, 13b) pour convertir le signal d'écho ou signal de correction vers une fréquence intermédiaire.

9. Module émetteur/récepteur selon l'une des revendications précédentes,
**caractérisé en ce que**
le coupleur (3) comporte un anneau guide d'ondes à quatre branchements (16a, 16b, 16c, 16d) ayant des segments de conducteurs (17a, 17b, 18a, 18b) dont la longueur correspond chaque fois à un quart de la longueur d'ondes du signal de détection, l'antenne de saisie (5) et la copie d'antenne (6) étant reliées à des branchements voisins (16b, 16c) ; et
l'émetteur (1) et le récepteur (2) sont reliés en commun à l'un des branchements (16b, 16c) de l'antenne de saisie (5) ou du branchement (16a) voisin de la copie d'antenne (6).
